# EUROPEAN PATENT APPLICATION

(11) **EP 4 635 333 A1**
(43) Date of publication of application: **22.10.2025**
(21) Application number: 23902402.9
(22) Date of filing: 16.11.2023
(51) Int. Cl.: A24F 40/50

(54) **DETECTION METHOD, DETECTION APPARATUS, READABLE STORAGE MEDIUM AND AEROSOL ATOMIZATION APPARATUS**

(30) Priority: 15.12.2022 CN 202211615633
(71) Applicant: Shenzhen Merit Technology Co., Ltd., Shenzhen, Guangdong 518105 (CN)
(72) Inventor: DOU, Hengheng, Shenzhen, Guangdong 518105 (CN)
(74) Representative: Winter, Brandl - Partnerschaft mbB
(86) International application number: PCT/CN2023/132119
(87) International publication number: WO 2024/125202

(57) **Abstract**

The present invention provides a detection method, a detection device, a readable storage medium, and an atomization device, and relates to the field of aerosol atomization technologies. The detection method is applied to the atomization device, and the atomization device includes a heating element for heating and atomizing an aerosol-forming material. The detection method includes: controlling the heating element to operate in a preset mode, where the preset mode includes at least two first heating stages, the heating powers corresponding to the at least two first heating stages match, and operation time lengths corresponding to the at least two heating stages match; obtaining a first resistance difference corresponding to a target heating stage in the at least two first heating stages, where the target heating stage is an operation stage other than an operation stage corresponding to the initial operation; and determining a presence status of the aerosol-forming material based on a numerical relationship between the first resistance difference and a difference threshold.

## Description

### TECHNICAL FIELD

The present invention relates to the field of atomization technologies, and specifically, to a detection method, a detection device, a readable storage medium, and an atomization device.

### BACKGROUND

An existing atomization device heats and atomizes an aerosol-forming material through a heating element to generate aerosols. When the aerosol-forming material is nearly to being exhausted, continuous heating on the aerosol-forming material by the heating element causes the temperature of the aerosol-forming material to be excessively high. As a result, the temperature exceeds the upper limit temperature of appropriate aerosol atomization. Consequently, an adverse effect on the quality of the generated aerosol is caused. Therefore, it is necessary to detect this adverse state.

In conventional technologies, generally, the real-time resistance of the heating component in a heating atomization component is detected and then compared with a threshold. However, in this method, when the initial resistances of mass-produced heating components are highly discrete, misjudgment is likely to occur, affecting accuracy of the detection.

Therefore, how to design a detection method to effectively solve the above technical problems becomes a technical problem that needs to be solved urgently.

### SUMMARY

The present invention aims to solve at least one of the technical problems existing in conventional technologies or related technologies.

Therefore, according to a first aspect of the present invention, a detection method is provided.

According to a second aspect of the present invention, a detection device is provided.

According to a third aspect of the present invention, a detection device is provided.

According to a fourth aspect of the present invention, a readable storage medium is provided.

According to a fifth aspect of the present invention, an atomization device is provided.

In view of this, according to a first aspect of the present invention, a detection method is provided and is applied to an atomization device. The atomization device includes a heating element for heating and atomizing an aerosol-forming material, and the detection method includes: controlling the heating element to operate in a preset mode, where the preset mode includes at least two first heating stages, the heating powers corresponding to the at least two first heating stages match, and operation time lengths corresponding to the at least two heating stages match; obtaining a first resistance difference corresponding to a target heating stage in the at least two first heating stages, where the target heating stage is an operation stage other than an operation stage corresponding to the initial operation; and determining a presence status of the aerosol-forming material based on a numerical relationship between the first resistance difference and a difference threshold.

In this technical solution, the first resistance difference obtained in the present invention is a change value of the resistance of the heating element in a heating process.

The change value is only related to a heating state and is not affected by the initial resistance of the heating element, and therefore whether the atomization device undergoes dry heating may be accurately determined, to solve a technical problem of poor determination accuracy in a related technology, avoid damage to user experience due to the dry heating problem, and avoid damage to the atomization device due to long-term dry heating. This achieves a technical effect of optimizing the detection method of the atomization device and improving the reliability and the safety of the atomization device.

In addition, the detection method in the foregoing technical solutions provided in the present invention may further have the following additional technical features.

In the foregoing technical solutions, the controlling the heating element to operate in a preset mode includes: in any one of the first heating stages, controlling the heating element to operate at a preset power; and after the heating element operates for a first time length, controlling the heating element to stop operation for a second time length, where the first time length is shorter than the second time length.

In this technical solution, by controlling the heating element to intermittently perform heat in the preset mode, the heating element can undergo a plurality of distinct heating and cooling processes, and specifically, each first heating stage corresponds to a heating and cooling process. At an initial heating stage, the aerosol-forming material is preheated. At the preheating stage, moisture adsorbed in the aerosol-forming material may be heated and evaporated, to avoid the accuracy of subsequent dry heating state determination being affected by the moisture absorbed in the aerosol-forming material. In addition, this can further improve the quality of final generated aerosols and avoid user experience being affected by evaporated water vapor discharged along with the aerosols.

In any one of the foregoing technical solutions, the obtaining a first resistance difference corresponding to a target heating stage in the at least two first heating stages includes: obtaining a first resistance and a second resistance of the heating element in each of the first heating stages, where the first resistance is greater than the second resistance; and performing difference calculation on the first resistance and the second resistance, to obtain the first resistance difference.

In this technical solution, a difference between the first resistance and the second resistance is used as the first resistance difference, and a drop value of the resistance of the heating element in the target heating stage can be accurately determined. Aerosol-forming materials with different material content are heated in the same heating mode, to obtain corresponding different resistance drop values. Therefore, the first resistance difference is used as a determination factor for determining whether there is a risk of dry heating, to eliminate interference factors such as the initial resistance of the heating element, thereby achieving a technical effect of optimizing the detection method and improving the accuracy of dry heating determination.

In any one of the foregoing technical solutions, the determining a presence status of the aerosol-forming material based on a numerical relationship between the first resistance difference and a difference threshold includes: when the first resistance difference is greater than or equal to the difference threshold, determining that the aerosol-forming material is sufficiently present; or when the first resistance difference is less than the difference threshold, determining that the aerosol-forming material is not sufficiently present.

In this technical solution, the resistance difference of the heating element in the target heating stage is used as a determination factor, and the difference threshold is used as a determination reference, to eliminate influence of the initial resistance of the heating element on the determination accuracy. This achieves a technical effect of optimizing the detection method of the atomization device and improving the reliability and the safety of the atomization device.

In any one of the foregoing technical solutions, after the determining a presence status of the aerosol-forming material based on a numerical relationship between the first resistance difference and a difference threshold, the method further includes: when the aerosol-forming material is sufficiently present, obtaining a third resistance of the heating element, where the third resistance is associated with the resistance of a resistor of the heating element in a steady state in an operation process; and controlling the heating element to operate based on the third resistance.

In this technical solution, operation of the heating element is controlled based on the third resistance, so that the atomization device has a dry heating monitoring ability and a dry heating avoiding ability in a second heating stage. Specifically, when it is determined, based on the third resistance, that there is a risk of dry heating in the second heating stage, a possibility of the risk of dry heating can be reduced by reducing the power of the heating element, or the risk of dry heating can be avoided by controlling the heating element to stop operation. Therefore, with reference to a dry heating detection step of the first heating stage, full-process dry heating detection of the atomization device can be implemented to prevent the heating element from overheating the aerosol-forming material, resulting in exhaustion of the aerosol-forming material. Therefore, a technical effect of improving coverage of the detection method and improving the safety and the reliability of atomization device is achieved.

In any one of the foregoing technical solutions, the obtaining a third resistance of the heating element includes: determining, when the heating element operates in a second heating stage for the first time, a steady-state stage in the second heating stage, where the heating power corresponding to the second heating stage is greater than the heating power corresponding to the first heating stage; obtaining a plurality of fourth resistances of the heating element in the steady-state stage; and determining the third resistance based on the plurality of fourth resistances.

In this technical solution, by defining the step of obtaining the third resistance in the 1^{st} second heating stage, the effectiveness and the reliability of the third resistance can be improved with reference to the detection step in the first heating stage, to ensure that whether there is a dry heating hazard in the second heating stage can be accurately determined based on the determined third resistance, further reduce a probability of a dry heating problem in the atomization device, and achieve a technical effect of improving the safety and the reliability of the atomization device.

In any one of the foregoing technical solutions, the determining the third resistance based on the plurality of fourth resistances includes: calculating an average resistance of the plurality of fourth resistances; and multiplying the average resistance by a preset coefficient, to obtain the third resistance.

In this technical solution, a solution for determining the third resistance based on the plurality of fourth resistances is provided. Specifically, after the plurality of fourth resistances are obtained in the steady-state stage, an average of the plurality of fourth resistances is calculated to be used as the average resistance. Then, the average resistance is multiplied by the preset coefficient to obtain the third resistance corresponding to the steady-state stage.

In any one of the foregoing technical solutions, the determining, when the heating element operates in a second heating stage for the first time, a steady-state stage in the second heating stage includes: obtaining a first start moment and a first end moment of the second heating stage; determining a second start moment based on the first start moment and a first preset time length, where the second start moment is a start moment of the steady-state stage; determining a second end moment based on the first end moment and a second preset time length, where the second end moment is an end moment of the steady-state stage; and determining the steady-state stage based on the second start moment and the second end moment.

In this technical solution, the steady-state stage in a complete operation stage in a historical operation record can be accurately determined based on the preset first preset time length and the second preset time length. This ensures that the plurality of fourth resistances for obtaining the third resistance are all steady-state resistances in the historical operation record, thereby improving the accuracy of determining whether there is a fault in the atomization device.

In any one of the foregoing technical solutions, the controlling the heating element to operate based on the third resistance includes: obtaining a fifth resistance of the heating element in a current operation process; and adjusting the heating power of the heating element when the fifth resistance is greater than the third resistance, to match the resistance of the heating element with the third resistance.

In this technical solution, by controlling the heating power of the heating element based on the third resistance, a dry heating fault of the atomization device in the second heating stage can be effectively avoided. In addition, the dry heating fault can be avoided, and continuous producing of atomized aerosols can be maintained by using a constant resistance heating method, thereby achieving a technical effect of improving the practicality and the safety of the atomization device.

In any one of the foregoing technical solutions, after the adjusting the heating power of the heating element when the fifth resistance is greater than the third resistance, the method further includes: obtaining a first number of times the fifth resistance is greater than the third resistance; and when the first number of times is greater than or equal to a preset number of times, controlling the heating element to stop operation, or reducing the heating power corresponding to the heating element.

In this technical solution, by recording the first number of times the fifth resistance is greater than the third resistance, the atomization device has an aerosol-forming material monitoring ability. Based on this, a risk state of the aerosol-forming material is determined based on the preset number of times, so that the atomization device can stop to be heated or can be heated at the low power in a timely manner before a dry heating problem occurs, thereby avoiding a risk of dry heating. Therefore, a technical effect of improving an intelligence level of the atomization device and improving the safety and the reliability of atomization device is achieved.

According to a second aspect of the present invention, a detection device is provided and is used in an atomization device. The atomization device includes a heating element for heating and atomizing an aerosol-forming material. The detection device includes: a control module, configured to control the heating element to operate in a preset mode, where the preset mode includes at least two first heating stages, the heating powers corresponding to the at least two first heating stages match, and operation time lengths corresponding to the at least two heating stages match; an obtaining module, configured to obtain a first resistance difference corresponding to a target heating stage in the at least two first heating stages, where the target heating stage is an operation stage other than an operation stage corresponding to the initial operation; and a determining module, configured to determine a presence status of the aerosol-forming material based on a numerical relationship between the first resistance difference and a difference threshold.

In this technical solution, the first resistance difference obtained in the present invention is a change value of the resistance of the heating element in a heating process. The change value is only related to a heating state and is not affected by the initial resistance of the heating element, and therefore whether the atomization device undergoes dry heating may be accurately determined, to solve a technical problem of poor determination accuracy in a related technology, avoid damage to user experience due to the dry heating problem, and avoid damage to the atomization device due to long-term dry heating. This achieves a technical effect of optimizing the detection device of the atomization device and improving the reliability and the safety of the atomization device.

According to a third aspect of the present invention, a detection device is provided, including: a memory, having a program or instructions stored therein; and a processor, configured to implement steps of the detection method of any one of the foregoing technical solutions when executing the program or the instructions.

The detection device provided in the present invention implements the steps of the detection method of any one of the foregoing technical solutions when the processor executes the program or the instructions stored in the memory, and therefore has all the beneficial effects of the detection method of any one of the foregoing technical solutions.

According to a fourth aspect of the present invention, a readable storage medium is provided, having a program or instructions stored thereon. When the program or the instructions are executed by a processor, steps of the detection method of any one of the foregoing technical solutions are implemented.

The readable storage medium provided in the present invention implements the steps of the detection method of any one of the foregoing technical solutions when the program or the instructions stored thereon are executed by the processor, and therefore has all the beneficial effects of the detection method of any one of the foregoing technical solutions.

According to a fifth aspect of the present invention, an atomization device is provided, including: the detection device of any one of the foregoing technical solutions; or the readable storage medium of any one of the foregoing technical solutions.

The atomization device provided in the present invention includes the detection device of any one of the foregoing technical solutions and the readable storage medium of any one of the foregoing technical solutions, and therefore has all the beneficial effects of the detection device and the readable storage medium of any one of the foregoing technical solutions.

Additional aspects and advantages of the present invention will become apparent in the following descriptions or will be understood by the practice of the present invention.

### BRIEF DESCRIPTION OF THE DRAWINGS

The foregoing and/or additional aspects and advantages of the present invention will become apparent and comprehensible from the following descriptions of embodiments with reference to the accompanying drawings.
FIG. 1 is a first schematic flowchart of a detection method according to an embodiment of the present invention;
FIG. 2 is a schematic diagram of a structure of an atomization device according to an embodiment of the present invention;
FIG. 3 is a second schematic flowchart of a detection method according to an embodiment of the present invention;
FIG. 4 is a schematic diagram of an operation status of a heating element in a first heating cycle according to an embodiment of the present invention;
FIG. 5 is a third schematic flowchart of a detection method according to an embodiment of the present invention;
FIG. 6 is a first operation data diagram of a heating element in a first heating cycle according to an embodiment of the present invention;
FIG. 7 is a second operation data diagram of a heating element in a first heating cycle according to an embodiment of the present invention;
FIG. 8 is a fourth schematic flowchart of a detection method according to an embodiment of the present invention;
FIG. 9 is a fifth schematic flowchart of a detection method according to an embodiment of the present invention;
FIG. 10 is a sixth schematic flowchart of a detection method according to an embodiment of the present invention;
FIG. 11 is a seventh schematic flowchart of a detection method according to an embodiment of the present invention;
FIG. 12 is a first operation data diagram of a heating element in a second heating cycle according to an embodiment of the present invention;
FIG. 13 is an eighth schematic flowchart of a detection method according to an embodiment of the present invention;
FIG. 14 is a ninth schematic flowchart of a detection method according to an embodiment of the present invention;
FIG. 15 is a second operation data diagram of a heating element in a second heating cycle according to an embodiment of the present invention;
FIG. 16 is a tenth schematic flowchart of a detection method according to an embodiment of the present invention;
FIG. 17 is a first block diagram of a structure of a detection device according to an embodiment of the present invention;
FIG. 18 is a second block diagram of a structure of a detection device according to an embodiment of the present invention; and
FIG. 19 is a block diagram of a structure of an atomization device according to an embodiment of the present invention.

### Reference numerals:

200: atomization device; 202: atomization chamber; 204: heating element; 206: heating wire.

### DETAILED DESCRIPTION

To make the foregoing objectives, features, and advantages of the present invention clearer, the following further describes the present invention in detail with reference to the accompanying drawings and specific implementations. It should be noted that, embodiments in the present invention and features in embodiments may be mutually combined in case that no conflict occurs.

In the following descriptions, many specific details are set forth to facilitate a full understanding of the present invention. However, the present invention may alternatively be implemented in another way different from those described herein. Therefore, a protection scope of the present invention is not limited to the specific embodiments disclosed below.

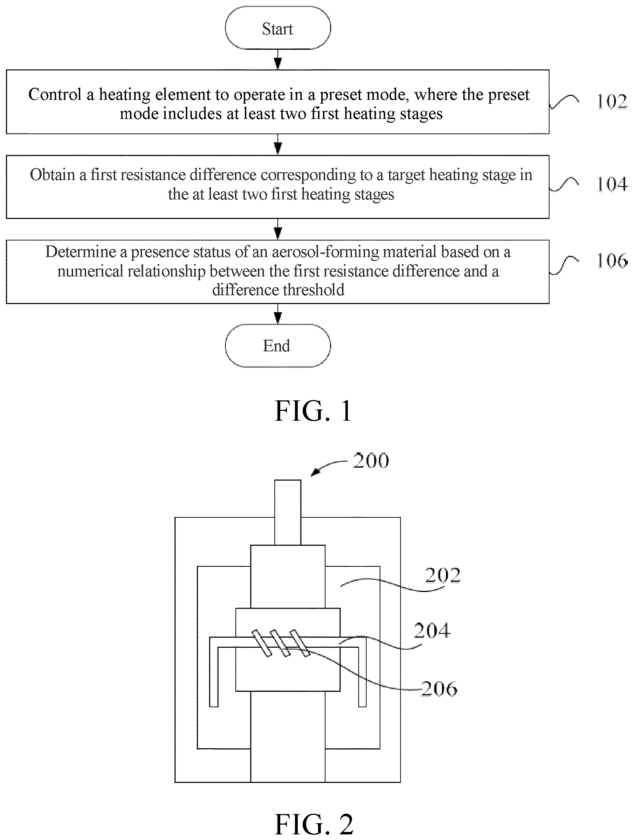

The following describes a detection method, a detection device, a readable storage medium, and an atomization device based on some embodiments of the present invention with reference to FIG. 1 to FIG. 19.

As shown in FIG. 1, an embodiment of the present invention provides a detection method. The detection method is applied to an atomization device. The atomization device includes a heating element for heating and atomizing an aerosol-forming material, and the detection method includes the following steps.

Step 102: Controlling the heating element to operate in a preset mode, where the preset mode includes at least two first heating stages.

The heating powers corresponding to the at least two first heating stages match, and operation time lengths corresponding to the at least two heating stages match.

Step 104: Obtaining a first resistance difference corresponding to a target heating stage in the at least two first heating stages.

The target heating stage is an operation stage other than an operation stage corresponding to the initial operation.

Step 106: Determining a presence status of the aerosol-forming material based on a numerical relationship between the first resistance difference and a difference threshold.

In this embodiment, to produce atomized aerosols, the atomization device heats the atomized aerosol-forming material by using the heating element. In a heating process, a material in the atomization material is gradually consumed. If the heating element is kept in a continuous heating state, a dry heating problem may occur. Alternatively, when initial material content of the loaded atomization material is low, a dry heating problem also occurs.

In view of this, the present invention provides a detection method applied to an atomization device. Specifically, after the atomization material is loaded, the heating element is first controlled to operate in the preset mode. The preset mode includes at least two first heating stages executed in sequence. Time lengths of a plurality of first heating stages are the same, and the heating powers corresponding to the plurality of heating stages at the same time point are the same.

A first heating stage executed first is an initial heating stage, and an N^{th} heating stage executed thereafter is the target heating stage, where N is an integer greater than 1. In a process of controlling the heating element to execute the target heating stage, a change value of the resistance corresponding to the heating element is obtained and used as a first resistance difference corresponding to the target heating stage.

After the first resistance difference is obtained, the first resistance difference is compared with a difference threshold for determining whether dry heating occurs. If a comparison result indicates that the first resistance difference is within a reasonable variation range, it means that the atomization device does not have a dry heating problem. On the contrary, if a comparison result indicates that the first resistance difference is outside a reasonable variation range, it means that the atomization device has a dry heating problem.

Specifically, the initial resistances of mass-produced heating elements are highly discrete. The solution in a related technology of determining, based on the real-time resistance of the heating element, whether the atomization device undergoes dry heating is affected by instability of the initial resistance of the heating element, and consequently, a dry heating state cannot be accurately determined. If the dry heating state is not accurately determined, a burnt smell may appear or even overheating and damage of the heating component may occur.

In view of this, the first resistance difference obtained in the present invention is the change value of the resistance of the heating element in a heating process. The change value is only related to a heating state and is not affected by the initial resistance of the heating element, and therefore whether the atomization device undergoes dry heating may be accurately determined, to solve a technical problem of poor determination accuracy in a related technology, avoid affecting user experience due to the dry heating problem, and avoid damaging the atomization device due to long-term dry heating. This achieves a technical effect of optimizing the detection method of the atomization device and improving the reliability and the safety of the atomization device.

Specifically, a reason for selecting the N^{th} first heating stage as the target heating stage instead of selecting the 1^{st} target heating stage as the target heating stage is: A aerosol-forming material just inserted may be a hot aerosol-forming material (for example, an aerosol-forming material a user takes out and reinserts without cooling down), or a cold aerosol-forming material (a new aerosol-forming material or an aerosol-forming material that is taken out, cooled, and then reinserted). When constant low-power electric power is supplied to the hot aerosol-forming material and the cold aerosol-forming material, starting points of resistances/temperature are different, and the resistances/temperature that can be reached after the same time are/is also different. If calculation is based on a 1^{st} cooling process, a maximum resistance difference is large, resulting in a large first resistance difference, and leading in inconvenience for calculation.

In the 1^{st} cooling process, although the maximum resistances are different, the minimum resistances reached after the same cooling time are not much different, that is, a starting resistance/temperature difference of a 2^{nd} first heating stage is small, so that a determination error based on the N^{th} first heating stage is small and the accuracy is high.

Specifically, a schematic diagram of a structure of the atomization device provided in an embodiment of the present invention is shown in FIG. 2. The atomization device 200 includes an atomization chamber 202 for storing an aerosol-forming material, and a heating element 204 for heating and atomizing the aerosol-forming material in the atomization chamber 202. The heating element 204 includes a heating wire 206. The heating wire 206 is made of metal and has a resistance-temperature characteristic. In a heating process, the resistance and the temperature of the heating wire 206 change as the heating element operates.

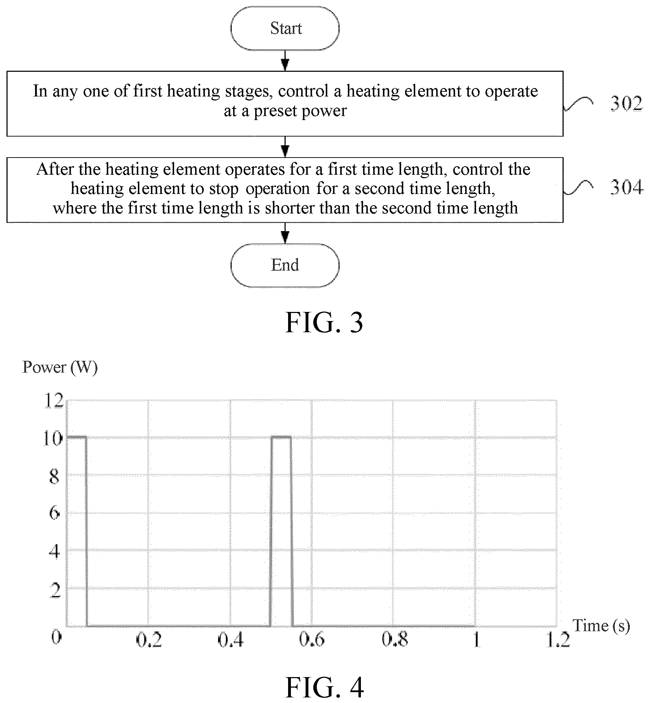

As shown in FIG. 3, in the foregoing embodiment, the controlling the heating element to operate in a preset mode includes the following steps.

Step 302: In any one of the first heating stages, controlling the heating element to operate at a preset power.

Step 304: After the heating element operates for a first time length, controlling the heating element to stop operation for a second time length, where the first time length is shorter than the second time length.

In this embodiment, the step of controlling the heating element to operate in preset mode is defined. Specifically, when the heating element is controlled to execute any one of the first heating stages, the heating element is first controlled to operate for the first time length at the preset power, and then the heating element is controlled to stop operation for the second time length, where the first time length is shorter than the second time length. After this first heating stage is completed, a next first heating stage is repeatedly executed to form a preset mode of intermittent heating.

By controlling the heating element to intermittently perform heating in the preset mode, the heating element can undergo a plurality of distinct heating and cooling processes, and specifically, each first heating stage corresponds to a heating and cooling process. At an initial heating stage, the aerosol-forming material is preheated. At the preheating stage, moisture adsorbed in the aerosol-forming material may be heated and evaporated, to avoid the accuracy of subsequent dry heating state determination being affected by the moisture absorbed in the aerosol-forming material. In addition, this can further improve the quality of final generated aerosols and avoid user experience being affected by evaporated water vapor discharged along with the aerosols.

Specifically, when the heating element operates at the preset power, the temperature of the heating element may evaporate the moisture in the aerosol-forming material, and this temperature does not vaporize a material in the aerosol-forming material, so that whether there is a risk of dry heating when the aerosol-forming material is inserted can be accurately determined and a loss of the material in a determination process can be avoided. Therefore, a technical effect of prolonging the service life of the aerosol-forming material is achieved.

In an optional embodiment, a range of the preset power is greater than or equal to 3W, and less than or equal to 7W.

Specifically, the first time length is shorter than the second time length. To be specific, in the first heating stage, a heating time length is shorter than a cooling time length. By setting the shorter first time length, vaporization caused by overheating of the aerosol-forming material can be avoided by limiting the heating time length. By setting the longer second time length, the aerosol-forming material can be sufficiently cooled to avoid vaporization caused by overheating of the aerosol-forming material in a next first heating stage. In addition, the first resistance difference that may be used for accurately determining whether dry heating occurs can be obtained through sufficient cooling, thereby avoiding a situation in which the effective first resistance difference cannot be obtained due to an insufficient cooling time length. Therefore, this achieves a technical effect of improving the accuracy of dry heating determination and improving the practicality and the safety of the atomization device.

In an optional embodiment, a range of the first time length is greater than or equal to 50 ms and less than or equal to 100 ms. Specifically, the first time length may be selected to be 50 ms. A range of the second time length is greater than or equal to 500 ms and less than or equal to 1000 ms. Specifically, the first time length may be selected to be 500 ms.

Specifically, an operation process of the preset mode is shown in FIG. 4. In FIG. 4, a horizontal coordinate represents an operation time length of the preset mode, and a vertical coordinate represents the power of the heating element.

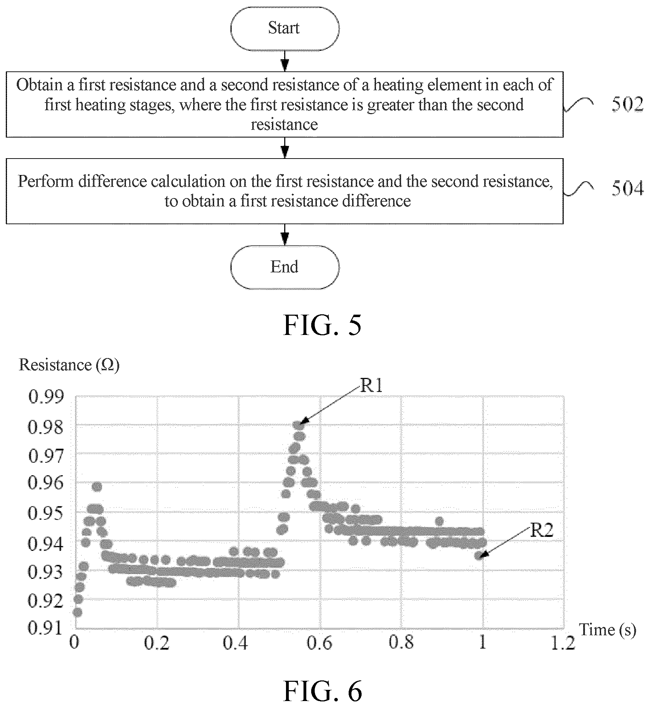

As shown in FIG. 5, in any one of the foregoing embodiments, the obtaining a first resistance difference corresponding to a target heating stage in the at least two first heating stages includes the following steps.

Step 502: Obtaining a first resistance and a second resistance of the heating element in each of the first heating stages, where the first resistance is greater than the second resistance.

Step 504: Performing difference calculation on the first resistance and the second resistance, to obtain the first resistance difference.

In this embodiment, the step of obtaining the first resistance difference corresponding to the target heating stage in the at least two first heating stages is described. Specifically, during executing the target heating stage, a plurality of resistances of the heating element are collected at equal intervals, the maximum value is selected from the plurality of collected resistances of the heating element as the first resistance, and the minimum value is selected from the plurality of resistances as the second resistance. Based on this, the difference calculation is performed on the first resistance and the second resistance, to obtain the first resistance difference for determining whether dry heating occurs.

A difference between the first resistance and the second resistance is used as the first resistance difference, and a drop value of the resistance of the heating element in the target heating stage can be accurately determined. Aerosol-forming materials with different material content are heated in the same heating mode, to obtain corresponding different resistance drop values. Therefore, the first resistance difference is used as a determination factor for determining whether there is a risk of dry heating, to eliminate interference factors such as the initial resistance of the heating element, thereby achieving a technical effect of optimizing the detection method and improving the accuracy of dry heating determination.

As shown in FIG. 6, when the aerosol-forming material heated by the heating element does not have the risk of dry heating, the obtained first resistance is R1, the second resistance is R2, and the first resistance difference is R1-R2.

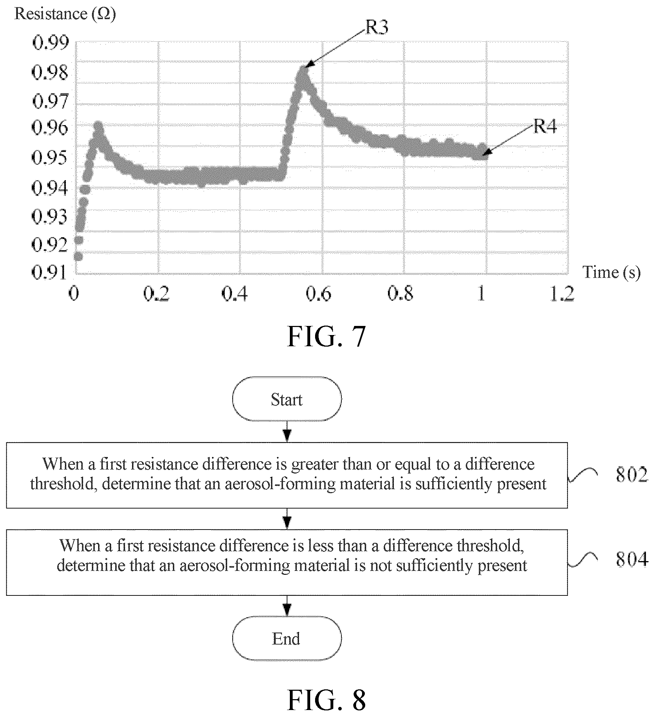

As shown in FIG. 7, when the aerosol-forming material heated by the heating element has the risk of dry heating, the obtained first resistance is R3, the second resistance is R4, and the first resistance difference is R3-R4.

As shown in FIG. 8, in any one of the foregoing embodiments, the determining a presence status of the aerosol-forming material based on a numerical relationship between the first resistance difference and a difference threshold includes the following steps.

Step 802: When the first resistance difference is greater than or equal to the difference threshold, determining that the aerosol-forming material is sufficiently.

Step 804: When the first resistance difference is less than the difference threshold, determining that the aerosol-forming material is not sufficiently.

In this embodiment, the step of determining the presence status of the aerosol-forming material based on the numerical relationship between the first resistance difference and the difference threshold is described. Specifically, after the first resistance difference is obtained, the first resistance difference is compared with the difference threshold.

Specifically, if the first resistance difference is greater than or equal to the difference threshold, it means that the aerosol-forming material is sufficient, then it is determined that the aerosol-forming material is sufficiently present, the risk of dry heating of the currently loaded aerosol-forming material is low, and an aerosol vaporization process can be performed. Correspondingly, if the first resistance difference is less than the difference threshold, it means that the aerosol-forming material is close to being exhausted, then it is determined that the aerosol-forming material is not sufficiently present, the risk of dry heating of the currently loaded aerosol-forming material is high, and an aerosol vaporization process cannot be performed.

In the present invention, the resistance difference of the heating element in the target heating stage is used as a determination factor, and the difference threshold is used as a determination reference, to eliminate influence of the initial resistance of the heating element on the determination accuracy. This achieves a technical effect of optimizing the detection method of the atomization device and improving the reliability and the safety of the atomization device.

The difference threshold is associated with a component design of the heating element. Heating elements with different design schemes correspond to different difference thresholds. Specifically, the difference threshold is associated with a structure of an atomization core in the heating element and the initial resistance of the heating element.

Specifically, a resistance difference range corresponding to an aerosol-forming material without a dry heating risk is a first range. The difference threshold is slightly larger than the maximum value in the difference range to ensure that the dry heating risk can be determined in a timely manner when the aerosol-forming material is close to being exhausted, thereby achieving a technical effect of improving the safety and the reliability of the atomization device.

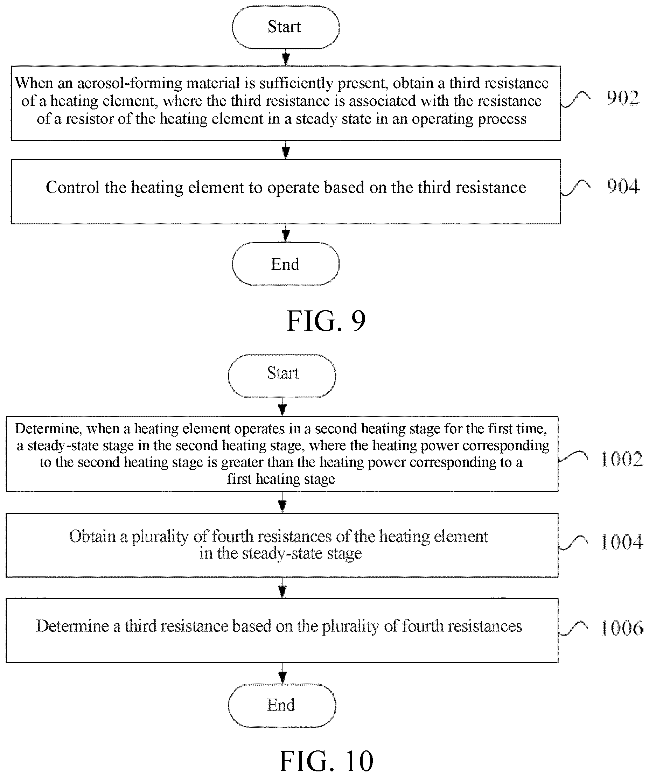

As shown in FIG. 9, in any one of the foregoing embodiments, after the determining a presence status of the aerosol-forming material based on a numerical relationship between the first resistance difference and a difference threshold, the method further includes the following steps.

Step 902: When the aerosol-forming material is sufficiently present, obtaining a third resistance of the heating element, where the third resistance is associated with the resistance of a resistor of the heating element in a steady state in an operation process.

Step 904: Controlling the heating element to operate based on the third resistance.

In this embodiment, in a case that it is determined, based on the first resistance difference and the difference threshold, that the currently loaded aerosol-forming material is sufficiently present, the heating element is controlled to execute a second heating stage. In the second heating stage, the third resistance corresponding to the heating element is obtained, and the third resistance is the resistance of the resistor of the heating element in the steady state in an operation process. After the third resistance is obtained, an operation state of the heating element is adjusted based on the third resistance.

Specifically, when the aerosol-forming material heated in the second heating stage has a sufficient material and has no dry heating risk, the heating element is in the steady state. Specifically, the resistance of the heating element changes significantly in initial and final stages of the second heating stage. In a middle stage, the resistance of the heating element is stable with a small fluctuation range. This middle stage is the steady-state stage of the heating element. The third resistance corresponds to the resistance of the heating element in this steady-state stage. Therefore, the third resistance may be used for determining whether the aerosol-forming material has the dry heating risk during the second heating stage.

Based on this, operation of the heating element is controlled based on the third resistance, so that the atomization device has a dry heating monitoring ability and a dry heating avoiding ability in the second heating stage. Specifically, when it is determined, based on the third resistance, that there is a risk of dry heating in the second heating stage, a possibility of the risk of dry heating can be reduced by reducing the power of the heating element, or the risk of dry heating can be avoided by controlling the heating element to stop operation. Therefore, with reference to a dry heating detection step of the first heating stage, full-process dry heating detection of the atomization device can be implemented to prevent the heating element from overheating the aerosol-forming material, resulting in exhaustion of the aerosol-forming material. Therefore, a technical effect of improving coverage of the detection method and improving the safety and the reliability of atomization device is achieved.

As shown in FIG. 10, in any one of the foregoing embodiments, the obtaining a third resistance of the heating element includes the following steps.

Step 1002: Determining, when the heating element operates in a second heating stage for the first time, a steady-state stage in the second heating stage, where the heating power corresponding to the second heating stage is greater than the heating power corresponding to the first heating stage.

Step 1004: Obtaining a plurality of fourth resistances of the heating element in the steady-state stage.

Step 1006: Determining the third resistance based on the plurality of fourth resistances.

In this embodiment, the step of obtaining the third resistance of the heating element is described. Specifically, when it is determined in the first heating stage that the aerosol-forming material is sufficiently present, the aerosol-forming material heated in a 1^{st} second heating stage executed immediately following the first heating stage has a sufficient material and has a low risk of dry heating, and there is a steady-state stage corresponding to the second heating stage inevitably, and the steady-state stage in the second heating stage is then determined.

After the steady-state heating stage is determined, a plurality of fourth resistances of the heating element in the steady-state heating stage are obtained, and the plurality of fourth resistances correspond to a plurality of different time points. Then, the third resistance corresponding to the steady-state stage is determined based on the plurality of fourth resistances.

It should be noted that, the steady-state stage is an operation stage in which the resistance of the heating element is in a stable state in the second heating stage. To be specific, a change value of the resistance of the heating element in the steady-state stage is less than a change threshold. The fourth resistance is the resistance of the heating element when the heating element operates in a first steady-state stage. The third resistance may be selected as a rolling average, an arithmetic mean, or a median of the plurality of fourth resistances. This is not limited in this embodiment and may be selected based on actual needs.

By defining the step of obtaining the third resistance in the 1^{st} second heating stage, the effectiveness and the reliability of the third resistance can be improved with reference to the detection step in the first heating stage, to ensure that whether there is a dry heating hazard in the second heating stage can be accurately determined based on the determined third resistance, further reduce a probability of a dry heating problem in the atomization device, and achieve a technical effect of improving the safety and the reliability of the atomization device.

The heating power of the heating element in the second heating stage is a second power, the heating power of the heating element in the first heating stage is a first power, and the second power is greater than the first power. The first power corresponds to a power at which water may be evaporated without vaporizing the aerosol-forming material. By setting the second power greater than the first power, it can be ensured that the aerosol-forming material is fully vaporized in the second heating stage to prepare an atomized aerosol that meets user needs.

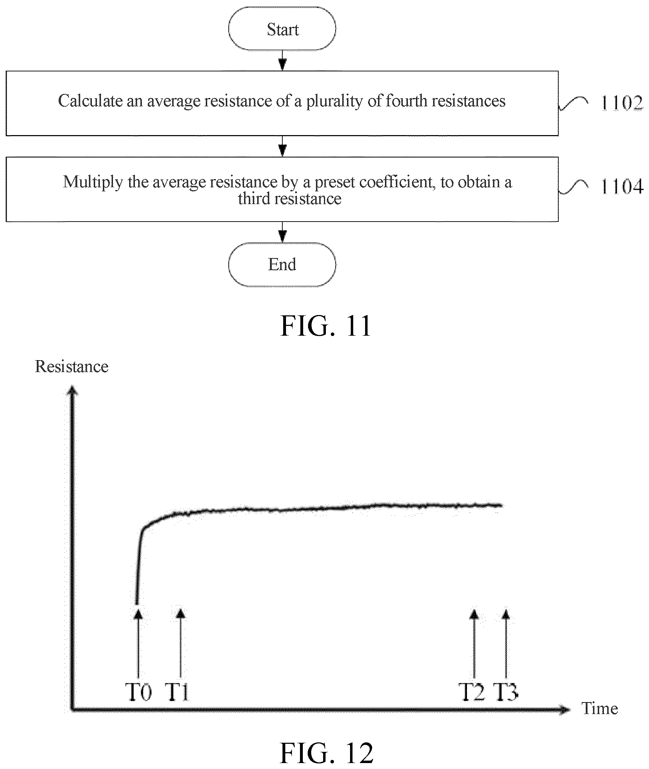

As shown in FIG. 11, in any one of the foregoing embodiments, the determining the third resistance based on the plurality of fourth resistances includes the following steps.

Step 1102: Calculating an average resistance of the plurality of fourth resistances.

Step 1104: Multiplying the average resistance by a preset coefficient, to obtain the third resistance.

In this embodiment, a solution for determining the third resistance based on the plurality of fourth resistances is provided. Specifically, after the plurality of fourth resistances are obtained in the steady-state stage, an average of the plurality of fourth resistances is calculated to be used as the average resistance. Then, the average resistance is multiplied by the preset coefficient to obtain the third resistance corresponding to the steady-state stage.

FIG. 12 shows an operation state of the heating element in the second heating stage. A steady-state value is an average value, a median value, or an effective value in the steady-state stage (a time period from T1 to T2). T0 is the start time of this heating, and T1 is a preset value and is the start time in the steady state, and T1>T0. T2 is the end time of the steady state, and T2>T1. Stop time of this heating stage is T3, and T2≤T3. A learned third resistance is calculated based on a fourth resistance between T1 and T2. To be specific, the third resistance=the fourth resistance*the preset coefficient. The preset coefficient is an empirical debugging value.

An effective second heating stage refers to a second heating stage in which the steady state is reached.

If the steady state is not reached in a heating process in a 1^{st} second heating stage, the second heating stage is determined to be an invalid second heating stage, and the steady-state resistance is not recorded in this case.

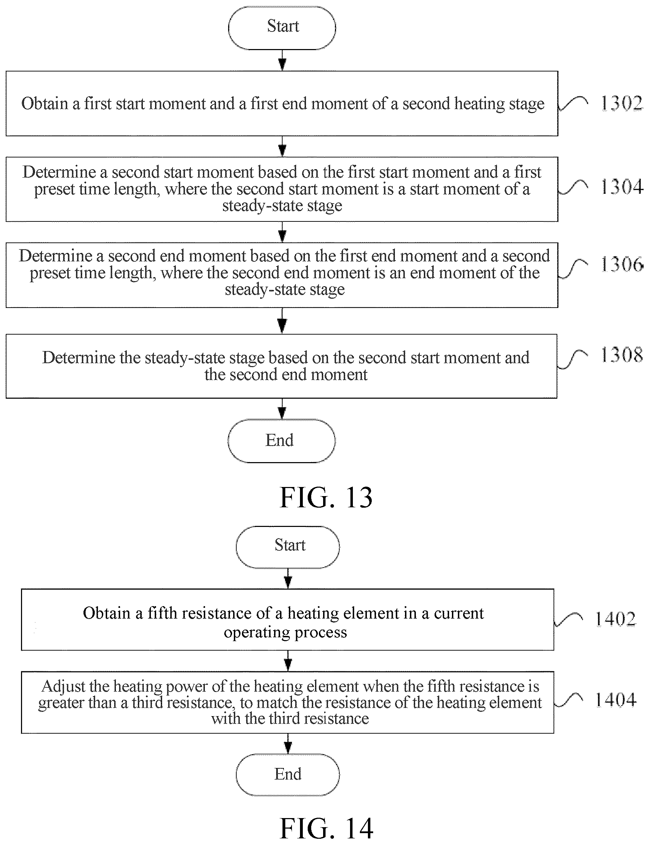

As shown in FIG. 13, in any one of the foregoing embodiments, the determining, when the heating element operates in a second heating stage for the first time, a steady-state stage in the second heating stage includes the following steps.

Step 1302: Obtaining a first start moment and a first end moment of the second heating stage.

Step 1304: Determining a second start moment based on the first start moment and a first preset time length, where the second start moment is a start moment of the steady-state stage.

Step 1306: Determining a second end moment based on the first end moment and a second preset time length, where the second end moment is an end moment of the steady-state stage.

Step 1308: Determining the steady-state stage based on the second start moment and the second end moment.

In this embodiment, during determining a steady-state stage in a historical operation record, a complete operation stage in the second heating stage is read. In addition, a steady-state stage in the complete operation stage is selected based on the first preset time length and the second preset time length.

The first preset time length is a time length taken by the heating element to reach the steady-state stage from the first start moment. The second preset time length is a time length taken by the heating element from the end of the steady-state stage to the end of the heating process.

Specifically, based on the first preset time length and the first start moment of the complete operation stage in the second heating stage, the second start moment can be determined, and the second start moment is later than the first start moment. Based on the second preset time length and the first end moment of the complete operation stage in the historical operation record, the second end moment can be determined, and the second end moment is earlier than the first end moment.

As shown in FIG. 12, T0 is the first start moment of the second heating stage, T3 is the first end moment of the second heating stage, T1 is the second start moment of the steady-state stage, and T2 is the second end moment of the steady-state stage. T0 to T1 is the first preset time length, and T2 to T3 is the second preset time length.

According to the present invention, the steady-state stage in the complete operation stage in the historical operation record can be accurately determined based on the preset first preset time length and the second preset time length. This ensures that the first resistance is the steady-state resistance in the historical operation record, thereby improving the accuracy of determining whether there is a fault in the atomization device.

As shown in FIG. 14, in any one of the foregoing embodiments, the controlling the heating element to operate based on the third resistance includes the following steps. Step 1402: Obtaining a fifth resistance of the heating element in a current operation process.

Step 1404: Adjusting the heating power of the heating element when the fifth resistance is greater than the third resistance, to match the resistance of the heating element with the third resistance.

In this embodiment, the step of controlling the heating element to operate based on the third resistance is described. Specifically, after the third resistance corresponding to the steady-state stage is determined, in a process of controlling the heating element to execute the second heating stage, the fifth resistance of the heating element is obtained in real time, and the fifth resistance is compared with the third resistance.

When a comparison result is that the fifth resistance is less than or equal to the third resistance, it means that the current fifth resistance of the heating element is within a safe range, a possibility that the atomization device undergoes dry heating is low, and there is no need to intervene to control the operation state of the heating element. On the contrary, when a comparison result is that the fifth resistance is greater than the third resistance, it means that the current fifth resistance of the heating element exceeds a safe range, and the heating power of the heating element is then adjusted to enable the subsequently collected resistance of the heating element to be less than or equal to the third resistance.

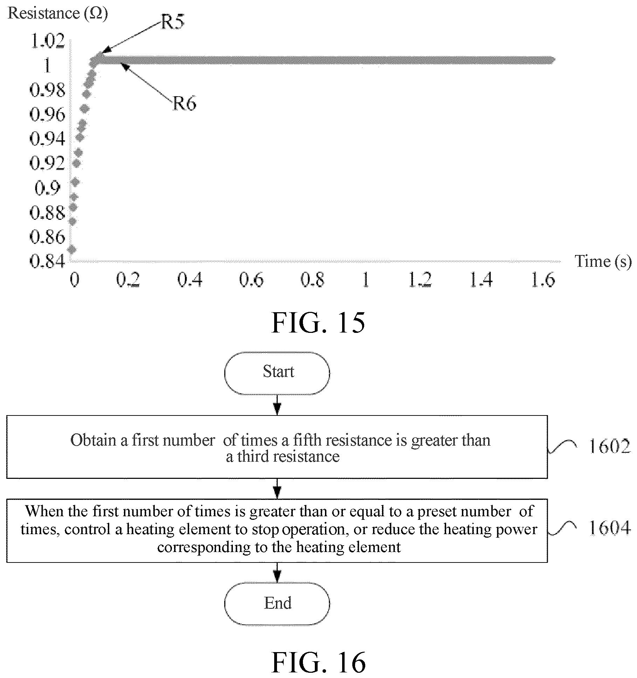

As shown in FIG. 15, in a process of controlling the heating element to operate based on the third resistance, R5 is the fifth resistance, and R6 is the third resistance. When R5>R6, a dry-heating flag is immediately set for the current second heating stage, a heating mode is adjusted from a constant power mode to a constant resistance mode, and constant resistance heating is performed based on the third resistance to avoid dry heating.

In view of this, in the present invention, by controlling the heating power of the heating element based on the third resistance, a dry heating fault of the atomization device in the second heating stage can be effectively avoided.

In addition, the dry heating fault can be avoided, and continuous producing of atomized aerosols can be maintained by using a constant resistance heating method, thereby achieving a technical effect of improving the practicality and the safety of the atomization device.

As shown in FIG. 16, in any one of the foregoing embodiments, after the adjusting the heating power of the heating element when the fifth resistance is greater than the third resistance, the method further includes the following steps.

Step 1602: Obtaining a first number of times the fifth resistance is greater than the third resistance.

Step 1604: When the first number of times is greater than or equal to a preset number of times, controlling the heating element to stop operation, or reducing the heating power corresponding to the heating element.

In this embodiment, when the heating element executes the second heating stage, if the fifth resistance is greater than the third resistance, a number of times the dry-heating flag appears is increased by one. During subsequent control of the heating element to repeatedly execute the second heating stage, when an accumulated number of times the dry-heating flag appears is greater than the preset first number of times, it is determined that the currently loaded aerosol-forming material is close to being exhausted, and the heating element is then controlled to reduce the heating power, or the heating element is controlled to stop performing heat to avoid overheating the aerosol-forming material, resulting in exhaustion of the aerosol-forming material.

The first number of times may be obtained based on historical data of the atomization device. In an optional embodiment, the first number of times is set to 3.

In view of this, by recording the first number of times the fifth resistance is greater than the third resistance, the atomization device has an aerosol-forming material monitoring ability. Based on this, a risk state of the aerosol-forming material is determined based on the preset number of times, so that the atomization device can stop to be heated or can be heated at the low power in a timely manner before the aerosol-forming material has a dry heating problem, thereby avoiding a risk of dry heating. Therefore, a technical effect of improving an intelligence level of the atomization device and improving the safety and the reliability of atomization device is achieved.

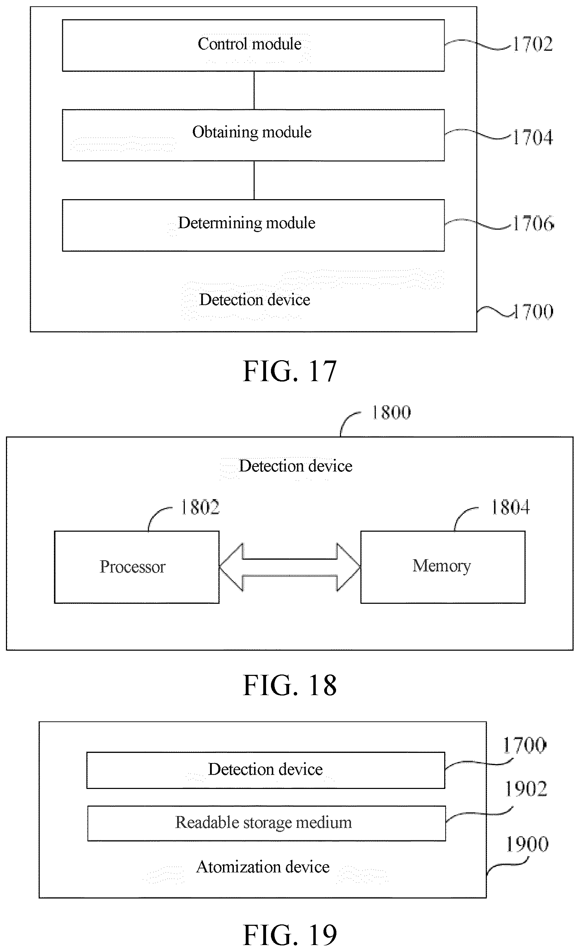

As shown in FIG. 17, an embodiment of the present invention provides a detection device 1700. The detection device 1700 is used in an atomization device. The atomization device includes a heating element for heating and atomizing an aerosol-forming material. The detection device 1700 includes: a control module 1702, configured to control the heating element to operate in a preset mode, where the preset mode includes at least two first heating stages, the heating powers corresponding to the at least two first heating stages match, and operation time lengths corresponding to the at least two heating stages match; an obtaining module 1704, configured to obtain a first resistance difference corresponding to a target heating stage in the at least two first heating stages, where the target heating stage is an operation stage other than an operation stage corresponding to the initial operation; and a determining module 1706, configured to determine a presence status of the aerosol-forming material based on a numerical relationship between the first resistance difference and a difference threshold.

In this embodiment, the first resistance difference obtained in the present invention is a change value of the resistance of the heating element in a heating process. The change value is only related to a heating state and is not affected by the initial resistance of the heating element, and therefore whether the atomization device undergoes dry heating may be accurately determined, to solve a technical problem of poor determination accuracy in a related technology, avoid damage to user experience due to the dry heating problem, and avoid damage to the atomization device due to long-term dry heating. This achieves a technical effect of optimizing the detection device 1700 of the atomization device and improving the reliability and the safety of the atomization device.

In any one of the foregoing embodiments, the control module 1702 is further configured to: in any one of the first heating stages, control the heating element to operate at a preset power; and after the heating element operates for a first time length, control the heating element to stop operation for a second time length, where the first time length is shorter than the second time length.

In this embodiment, by controlling the heating element to intermittently perform heat in the preset mode, the heating element can undergo a plurality of distinct heating and cooling processes, and specifically, each first heating stage corresponds to a heating and cooling process. At an initial heating stage, the aerosol-forming material is preheated. At the preheating stage, moisture adsorbed in the aerosol-forming material may be heated and evaporated, to avoid the accuracy of subsequent dry heating state determination being affected by the moisture absorbed in the aerosol-forming material. In addition, this can further improve the quality of final generated aerosols and avoid user experience being affected by evaporated water vapor discharged along with the aerosols.

Specifically, when the heating element operates at the preset power, the temperature of the heating element may evaporate the moisture in the aerosol-forming material, and this temperature does not vaporize a material in the aerosol-forming material, so that whether there is a risk of dry heating when the aerosol-forming material is inserted can be accurately determined and a loss of the material in a determination process can be avoided. Therefore, a technical effect of prolonging the service life of the aerosol-forming material is achieved.

In any one of the foregoing embodiments, the obtaining module 1704 is further configured to: obtain a first resistance and a second resistance of the heating element in each of the first heating stages, where the first resistance is greater than the second resistance; and perform difference calculation on the first resistance and the second resistance, to obtain the first resistance difference.

In this embodiment, a difference between the first resistance and the second resistance is used as the first resistance difference, and a drop value of the resistance of the heating element in the target heating stage can be accurately determined. Aerosol-forming materials with different material content are heated in the same heating mode, to obtain corresponding different resistance drop values. Therefore, the first resistance difference is used as a determination factor for determining whether there is a risk of dry heating, to eliminate interference factors such as the initial resistance of the heating element, thereby achieving a technical effect of optimizing the detection device 1700 and improving the accuracy of dry heating determination.

In any one of the foregoing embodiments, the determining module 1706 is further configured to: when the first resistance difference is greater than or equal to the difference threshold, determine that the aerosol-forming material is sufficiently present; or when the first resistance difference is less than the difference threshold, determine that the aerosol-forming material is not sufficiently present.

In this embodiment, the resistance difference of the heating element in the target heating stage is used as a determination factor, and the difference threshold is used as a determination reference, to eliminate influence of the initial resistance of the heating element on the determination accuracy. This achieves a technical effect of optimizing the detection device 1700 of the atomization device and improving the reliability and the safety of the atomization device.

In any one of the foregoing embodiments, after the determining a presence status of the aerosol-forming material based on a numerical relationship between the first resistance difference and a difference threshold, the control module 1702 is further configured to: when the aerosol-forming material is sufficiently present, obtain a third resistance of the heating element, where the third resistance is associated with the resistance of a resistor of the heating element in a steady state in an operation process; and control the heating element to operate based on the third resistance.

In this embodiment, operation of the heating element is controlled based on the third resistance, so that the atomization device has a dry heating monitoring ability and a dry heating avoiding ability in the second heating stage. Specifically, when it is determined, based on the third resistance, that there is a risk of dry heating in the second heating stage, a possibility of the risk of dry heating can be reduced by reducing the power of the heating element, or the risk of dry heating can be avoided by controlling the heating element to stop operation. Therefore, with reference to a dry heating detection step of the first heating stage, full-process dry heating detection of the atomization device can be implemented to prevent the heating element from overheating the aerosol-forming material, resulting in exhaustion of the aerosol-forming material. Therefore, a technical effect of improving coverage of the detection device 1700 and improving the safety and the reliability of atomization device is achieved.

In any one of the foregoing embodiments, the control module 1702 is further configured to: determine, when the heating element operates in a second heating stage for the first time, a steady-state stage in the second heating stage, where the heating power corresponding to the second heating stage is greater than the heating power corresponding to the first heating stage; obtain a plurality of fourth resistances of the heating element in the steady-state stage; and determine the third resistance based on the plurality of fourth resistances.

In this embodiment, by defining the step of obtaining the third resistance in a 1^{st} second heating stage, the effectiveness and the reliability of the third resistance can be improved with reference to the detection step in the first heating stage, to ensure that whether there is a dry heating hazard in the second heating stage can be accurately determined based on the determined third resistance, further reduce a probability of a dry heating problem in the atomization device, and achieve a technical effect of improving the safety and the reliability of the atomization device.

In any one of the foregoing embodiments, the control module 1702 is further configured to: calculate an average resistance of the plurality of fourth resistances; and multiply the average resistance by a preset coefficient, to obtain the third resistance.

In this embodiment, a solution for determining the third resistance based on the plurality of fourth resistances is provided. Specifically, after the plurality of fourth resistances are obtained in the steady-state stage, an average of the plurality of fourth resistances is calculated to be used as the average resistance. Then, the average resistance is multiplied by the preset coefficient to obtain the third resistance corresponding to the steady-state stage.

In any one of the foregoing embodiments, the control module 1702 is further configured to: obtain a first start moment and a first end moment of the second heating stage; determine a second start moment based on the first start moment and a first preset time length, where the second start moment is a start moment of the steady-state stage; determine a second end moment based on the first end moment and a second preset time length, where the second end moment is an end moment of the steady-state stage; and determine the steady-state stage based on the second start moment and the second end moment.

In this embodiment, the steady-state stage in a complete operation stage in a historical operation record can be accurately determined based on the preset first preset time length and the second preset time length. This ensures that the plurality of fourth resistances for obtaining the third resistance are all steady-state resistances in the historical operation record, thereby improving the accuracy of determining whether there is a fault in the atomization device.

In any one of the foregoing embodiments, the control module 1702 is further configured to: obtain a fifth resistance of the heating element in a current operation process; and adjust the heating power of the heating element when the fifth resistance is greater than the third resistance, to match the resistance of the heating element with the third resistance.

In this embodiment, according to the present invention, by controlling the heating power of the heating element based on the third resistance, a dry heating fault of the atomization device in the second heating stage can be effectively avoided. In addition, the dry heating fault can be avoided, and continuous producing of atomized aerosols can be maintained by using a constant resistance heating method, thereby achieving a technical effect of improving the practicality and the safety of the atomization device.

In any one of the foregoing embodiments, after the adjusting the heating power of the heating element when the fifth resistance is greater than the third resistance, the control module 1702 is further configured to: obtain a first number of times the fifth resistance is greater than the third resistance; and when the first number of times is greater than or equal to a preset number of times, control the heating element to stop operation, or reduce the heating power corresponding to the heating element.

In this embodiment, by recording the first number of times the fifth resistance is greater than the third resistance, the atomization device has an aerosol-forming material monitoring ability. Based on this, a risk state of the aerosol-forming material is determined based on the preset number of times, so that the atomization device can stop to be heated or can be heated at the low power in a timely manner before the aerosol-forming material has a dry heating problem, thereby avoiding a risk of dry heating. Therefore, a technical effect of improving an intelligence level of the atomization device and improving the safety and the reliability of atomization device is achieved.

As shown in FIG. 18, an embodiment of the present invention provides a detection device 1800, and the detection device 1800 includes: a memory 1804, having a program or instructions stored therein; and a processor 1802, configured to implement steps of the detection method provided in any one of the foregoing embodiments when executing the program or the instructions.

The detection device 1800 provided in the present invention implements the steps of the detection method provided in any of the foregoing embodiments when the processor 1802 executes the program or the instructions stored in the memory 1804, and therefore, has the beneficial effects of large tolerance and high accuracy of the detection method provided in any of the foregoing embodiments. Details are not described herein.

An embodiment of the present invention provides a readable storage medium 1902, having a program or instructions stored thereon. When the program or the instructions are executed by a processor, steps of the detection method provided in any one of the foregoing embodiments are implemented.

The readable storage medium 1902 provided in the present invention implements the steps of the detection method provided in any one of the foregoing embodiments when the program or the instructions stored thereon are executed by the processor, and therefore, has the beneficial effects of large tolerance and high accuracy of the detection method provided in any of the foregoing embodiments. Details are not described herein.

As shown in FIG. 19, an embodiment of the present invention provides an atomization device 1900, including: the detection device 1700 provided in the foregoing embodiment 2; and/or the readable storage medium 1902 provided in any of the foregoing embodiments.

Therefore, the atomization device 1900 has the beneficial effects of large tolerance and high accuracy of the detection device and the readable storage medium provided in any of the foregoing embodiments. Details are not described herein.

In the present invention, the term "a plurality of" means two or more, unless otherwise expressly limited. Unless otherwise explicitly specified or defined, the terms such as "install", "connect", "connection", and "fix" should be understood in a broad sense. For example, the connection may be a fixed connection, a detachable connection, or an integral connection; or the connection may be a direct connection, an indirect connection through an intermediary. A person of ordinary skill in the art can understand specific meanings of the terms in the present invention based on specific situations.

In the descriptions of this specification, a description of a term such as "an embodiment", "some embodiments", or "a specific embodiment" means that a specific feature, structure, material, or feature that is described with reference to the embodiment or the example is included in at least one embodiment or example of the present invention. In this specification, exemplary descriptions of the foregoing terms do not necessarily refer to the same embodiment or example. In addition, the described specific features, structures, materials, or characteristics may be combined in a proper manner in any one or more of the embodiments or examples.

The foregoing descriptions are merely preferred embodiments of the present invention, but are not intended to limit the present invention. A person skilled in the art may make various alterations and variations to the present invention. Any modification, equivalent replacement, or improvement made and the like within the spirit and principle of the present invention shall fall within the protection scope of the present invention.

## Claims

1. A detection method, applied to an atomization device comprising a heating element for heating and atomizing an aerosol-forming material, and the detection method comprises:
controlling the heating element to operate in a preset mode, wherein the preset mode comprises at least two first heating stages, the heating powers corresponding to the at least two first heating stages match, and operation time lengths corresponding to the at least two heating stages match;
obtaining a first resistance difference corresponding to a target heating stage in the at least two first heating stages, wherein the target heating stage is an operation stage other than an operation stage corresponding to the initial operation; and
determining a presence status of the aerosol-forming material based on a numerical relationship between the first resistance difference and a difference threshold.

2. The detection method of claim 1, wherein the controlling the heating element to operate in a preset mode comprises: in any one of the first heating stages, controlling the heating element to operate at a preset power; and after the heating element operates for a first time length, controlling the heating element to stop operation for a second time length, wherein the first time length is shorter than the second time length.

3. The detection method of claim 2, wherein the obtaining a first resistance difference corresponding to a target heating stage in the at least two first heating stages comprises: obtaining a first resistance and a second resistance of the heating element in each of the first heating stages, wherein the first resistance is greater than the second resistance; and
performing difference calculation on the first resistance and the second resistance, to obtain the first resistance difference.

4. The detection method of any one of claims 1 to 3, wherein the determining a presence status of the aerosol-forming material based on a numerical relationship between the first resistance difference and a difference threshold comprises: when the first resistance difference is greater than or equal to the difference threshold, determining that the aerosol-forming material is sufficiently present; or
when the first resistance difference is less than the difference threshold, determining that the aerosol-forming material is not sufficiently present.

5. The detection method of any one of claims 1 to 3, wherein after the determining a presence status of the aerosol-forming material based on a numerical relationship between the first resistance difference and a difference threshold, the method further comprises:
when the aerosol-forming material is sufficiently present, obtaining a third resistance of the heating element, wherein the third resistance is associated with the resistance of a resistor of the heating element in a steady state in an operation process; and controlling the heating element to operate based on the third resistance.

6. The detection method of claim 5, wherein the obtaining a third resistance of the heating element comprises:
determining, when the heating element operates in a second heating stage for the first time,
a steady-state stage in the second heating stage, wherein the heating power corresponding to the second heating stage is greater than the heating power corresponding to the first heating stage;
obtaining a plurality of fourth resistances of the heating element in the steady-state stage; and
determining the third resistance based on the plurality of fourth resistances.

7. The detection method of claim 6, wherein the determining the third resistance based on the plurality of fourth resistances comprises:
calculating an average resistance of the plurality of fourth resistances; and
multiplying the average resistance by a preset coefficient, to obtain the third resistance.

8. The detection method of claim 6, wherein the determining, when the heating element operates in a second heating stage for the first time, a steady-state stage in the second heating stage, comprises:
obtaining a first start moment and a first end moment of the second heating stage; determining a second start moment based on the first start moment and a first preset time length, wherein the second start moment is a start moment of the steady-state stage;
determining a second end moment based on the first end moment and a second preset time length, wherein the second end moment is an end moment of the steady-state stage; and
determining the steady-state stage based on the second start moment and the second end moment.

9. The detection method of claim 5, wherein the controlling the heating element to operate based on the third resistance comprises: obtaining a fifth resistance of the heating element in a current operation process; and
adjusting the heating power of the heating element when the fifth resistance is greater than the third resistance, to match the resistance of the heating element with the third resistance.

10. The detection method of claim 9, wherein after the adjusting the heating power of the heating element when the fifth resistance is greater than the third resistance, the method further comprises:
obtaining a first number of times the fifth resistance is greater than the third resistance;
and
when the first number of times is greater than or equal to a preset number of times, controlling the heating element to stop operation, or reducing the heating power corresponding to the heating element.

11. A detection device, used in an atomization device, wherein the atomization device comprises a heating element for heating and atomizing an aerosol-forming material, and the detection device comprises:
a control module, configured to control the heating element to operate in a preset mode, wherein the preset mode comprises at least two first heating stages, the heating powers corresponding to the at least two first heating stages match, and operation time lengths corresponding to the at least two heating stages match;
an obtaining module, configured to obtain a first resistance difference corresponding to a target heating stage in the at least two first heating stages, wherein the target heating stage is an operation stage other than an operation stage corresponding to the initial operation; and
a determining module, configured to determine a presence status of the aerosol-forming material based on a numerical relationship between the first resistance difference and a difference threshold.

12. A detection device, comprising:
a memory, having a program or instructions stored therein; and
a processor, configured to implement steps of the detection method of any one of claims 1 to 10 when executing the program or the instructions.

13. A readable storage medium, having a program or instructions stored thereon, wherein when the program or the instructions are executed by a processor, steps of the detection method of any one of claims 1 to 10 are implemented.

14. An atomization device, comprising:
the detection device of claim 11 or 12; or
the readable storage medium of claim 13.

15. The atomization device of claim 14, comprising:
a housing; and
an atomizer detachably connected to the housing, wherein the atomizer comprises: a heating element and a material chamber, wherein the material chamber is configured to store an aerosol-forming material, and the heating element is configured to atomize the aerosol-forming material.
